# EUROPÄISCHE PATENTSCHRIFT

(11) **EP 1 788 306 B1**
(45) Veröffentlichungstag und Bekanntmachung des Hinweises auf die Patenterteilung: **29.02.2012**
(21) Anmeldenummer: 05025297.2
(22) Anmeldetag: 19.11.2005
(51) Int. Cl.: F23G 5/50

(54) **Regelungsverfahren für Müllverbrennungsanlagen mit Stützbrennerbetrieb**
Control Method for Refuse Incinerators having Auxiliary Burners
Procédé de régulation pour des incinérateurs d'ordures disposant de brûleurs d'appoint

(43) Veröffentlichungstag der Anmeldung: 23.05.2007
(73) Patentinhaber: Hitachi Zosen Inova AG, 8005 Zürich (CH)
(72) Erfinder: Mercx, Josef, 5401 Baden (CH); Benz, Peter, 8906 Bonstetten (CH)
(74) Vertreter: Schaad, Balass, Menzl & Partner AG

(56) Entgegenhaltungen:
- EP-A- 0 213 980
- EP-A- 0 499 976
- EP-A- 0 696 708
- EP-A- 0 860 657
- DE-B- 1 279 880

## Beschreibung

Die vorliegende Erfindung betrifft ein Regelungsverfahren und eine Feuerleistungsregeleinrichtung zum Betrieb einer Müllverbrennungsanlage sowie ein Müllverbrennungsanlage gemäss den Oberbegriffen der Ansprüche 1, 7 und 10.

Müllverbrennungsanlagen dienen im Allgemeinen der Kompaktierung, Hygienisierung und Mineralisierung von Müll sowie der Konzentration und Inertisierung von im Müll enthaltenen Schadstoffen bei vorzugsweise umweltverträglichen Emissionen. Die bei der Müllverbrennung anfallende Energie sowie am Ende der Verbrennung anfallende Reststoffe können einer vielschichtigen Nutzung bzw. Verwertung zugeführt werden. So kann beispielsweise der Heizwert des Mülls mittels einer Dampferzeugung zur Bereitstellung von Prozessdampf oder Fernwärme sowie zur Erzeugung von Elektroenergie genutzt werden. Der am Ende des Verbrennungsprozesses anfallende Reststoff Schlacke kann als Wertstoff, beispielsweise im Strassenbau, Verwendung finden.

Ein Regelungsverfahren zum Betrieb einer Müllverbrennungsanlage ist beispielsweise in der EP0499976 beschrieben. Dabei wird eine gleichmässige Wärme- bzw. Dampferzeugung über eine mehrschleifige Regeleinrichtung, in der die erzeugte Dampfleistung (Dampfmenge pro Zeiteinheit) als Hauptregelgrösse und der Sauerstoffgehalt im Rauchgas als Hilfsregelgrösse geführt ist, erreicht. Dazu ist eine zur Durchführung des Verfahrens befähigte Feuerleistungsregeleinrichtung mit einer Messeinrichtung für die Dampfmenge und den Sauerstoffgehalt des Rauchgases sowie einem langsamen Hauptregler für die Dampfleistung ausgestattet. Parallel zum Hauptregler ist ein schneller O₂-Regler geschaltet und deren Ausgänge sind mit den Stellgliedern Stössel, Rost und Primärluftklappen verbunden.

Zur Minimierung der Umweltbelastung durch Abgase einer Müllverbrennungsanlage legen gesetzliche Vorschriften in zunehmendem Masse fest, dass eine sogenannte Mindestfeuerungstemperatur nicht unterschritten werden darf, da erst durch die Einhaltung dieser Mindestfeuerungstemperatur eine unvollständige Verbrennung der Abgase vermieden und beispielsweise der Anteil an organischen Stoffen in den Abgasen begrenzt wird. Zur Sicherstellung einer Mindestfeuerungstemperatur, die beispielsweise auf 850°C festgesetzt sein kann, werden in modernen Müllverbrennungsanlagen Stützbrenner eingesetzt. Stützbrenner ermöglichen durch eine Verbrennung fossiler Brennstoffe, beispielsweise Oel oder Gas, die Feuerungstemperatur oberhalb des entsprechenden Mindestwertes zu halten. Eine derartige Feuerleistungsregelung ist z.B. aus DE 1 279 880 B1 bekannt.

Beim Einsatz von Stützbrennern sind insbesondere zwei Aspekte zu beachten:
1. in Abhängigkeit von der Brennerleistung des Stützbrenners wird eine an der Dampfleistung anteilige Brennerdampfleistung erzeugt, welche die gesamte Feuerleistungsregeleinrichtung, die im Normalfall ohne die Zündung von Stützbrennern auskommt, beeinflusst; und
2. aufgrund der gleichbleibenden Qualität der Brennstoffe für den Stützbrenner und der somit leicht zu steuernden Brennerleistung haben konventionelle Feuerleistungssysteme die Tendenz, bei abnehmendem Sauerstoffgehalt im Rauchgas die Verbrennung von Müll zu bremsen und dadurch tendenziell die Dampfleistung aus der Müllverbrennung durch eine vom Stützbrenner erzeugte Brennerdampfleistung zu ersetzen.

Dies führt dazu, dass bei bestehenden Feuerleistungsregeleinrichtungen häufig in einen handgesteuerten Betriebsmodus gewechselt werden muss und die Rückkehr aus einem Betrieb mit Stützbrenner in den normalen Müllverbrennungsbetrieb unnötig lange herausgezögert wird und dadurch erhöhte Betriebskosten bei einem verringerten Mülldurchsatz anfallen.

Es besteht daher die Aufgabe, ein Regelungsverfahren bzw. eine Feuerleistungsregeleinrichtung für den Betrieb einer Müllverbrennungsanlage unter Einhaltung einer Mindestfeuerungstemperatur bei minimalem Einsatz von Stützbrennern bereitzustellen.

Diese Aufgabe wird durch ein Regelungsverfahren bzw. eine Feuerleistungsregeleinrichtung zum Betrieb einer Müllverbrennungsanlage und eine Müllverbrennungsanlage gemäss den Ansprüchen 1, 7 und 10 gelöst. Besonders bevorzugte Ausführungsformen sind mit in abhängigen Ansprüchen genannten Merkmalen ausgestattet.

Bei einem erfindungsgemässen Regelungsverfahren bzw. einer Feuerleistungsregeleinrichtung zum Betrieb einer Müllverbrennungsanlage wird als eine Messgrösse eine Brennerleistung eines Stützbrenners, der zur Aufrechterhaltung einer Mindestfeuerungstemperatur gezündet wird, einbezogen. Als Mass für die Brennerleistung dient dabei beispielsweise der Brennstoffverbrauch des Stützbrenners. Aus der Brennerleistung wird eine Brennerdampfleistung berechnet, welche den durch das Stützbrennerfeuer erzeugten Beitrag an einer gesamten Dampfleistung der Müllverbrennungsanlage wiedergibt.

In Abhängigkeit von der Brennerleistung und vom jeweiligen Arbeitspunkt in einem Feuerungsdiagramm wird entsprechend die Dampfleistung der Müllverbrennungsanlage geregelt. Bei kleinen Dampfleistungen wird dazu ein Dampfleistungsbeitrag aus der Müllverbrennung nahezu gleich belassen, während die gesamte Dampfleistung um den Brennerleistungsbetrag erhöht wird. Dies geschieht beispielsweise, indem ein entsprechender Dampfleistungssollwert eines Dampfreglers um den Brennerleistungsbetrag erhöht wird. Nähert sich nun die Summe aus dem Dampfleistungsbeitrag der Müllverbrennung und der Brennerdampfleistung einer maximalen Dampfleistung an, so wird die gesamte Dampfleistung aus der Müllverbrennung und der Stützfeuerung höchstens bis zur maximalen Dampfleistung erhöht. Ist durch das Zuschalten des Stützbrenners die maximale Dampfleistung erreicht oder überschritten, so wird die Dampfproduktion nicht weiter erhöht, sondern der Mülldurchsatz zurückgefahren.

Das Regelungsverfahren gewährleistet auf diese Weise einen Betrieb unter Einhaltung einer Mindestfeuerungstemperatur bei einem minimalen Einsatz des Stützbrenners. In der Folge werden fossile Brennstoffe zum Betrieb des Stützbrenners und damit Kosten eingespart. Je nach Feuerungszustand wird es möglich, schnell und automatisch von einem Betrieb mit Stützbrenner in den Normalbetrieb ohne Stützbrenner unter Maximierung des Mülldurchsatzes zurückzukehren.

Das erfindungsgemässe Regelungsverfahren und die erfindungsgemässe Feuerleistungsregelungseinrichtung sind vorzugsweise als Ergänzung zu der aus der EP0499976 bekannten Regelung ausgeführt, auf deren Inhalt hier Bezug genommen wird. Sie können aber auch auf Basis anderer Regelungen eingesetzt werden.

Besonders bevorzugte Ausbildungsformen der Erfindung werden im Folgenden anhand der Zeichnung erläutert.

Es zeigen rein schematisch:
- Fig. 1: den Aufbau einer konventionellen Müllverbrennungsanlage mit Stützbrenner und Elementen einer bekannten Feuerleistungsregeleinrichtung;
- Fig. 2: ein Blockschaltbild der bekannten Feuerleistungsregeleinrichtung;
- Fig. 3: ein Blockschaltbild einer Feuerleistungsregeleinrichtung zur Ausführung eines erfindungsgemässen Regelungsverfahrens unter Einsatz einer Sauerstoffsollwertkorrektureinheit und einer Brennerdampfleistungsausgleichseinheit;
- Fig. 4: ein Blockschaltbild der Brennerdampfleistungsausgleichseinheit; und
- Fig. 5: ein Feuerungsdiagramm mit Ausgangspositionen A1, B1 und C1 ohne Stützbrennerbetrieb und mittels des erfindungsgemässen Regelungsverfahrens eingeregelte Endpositionen A2, B2 und C2 bei einem Stützbrennerbetrieb.

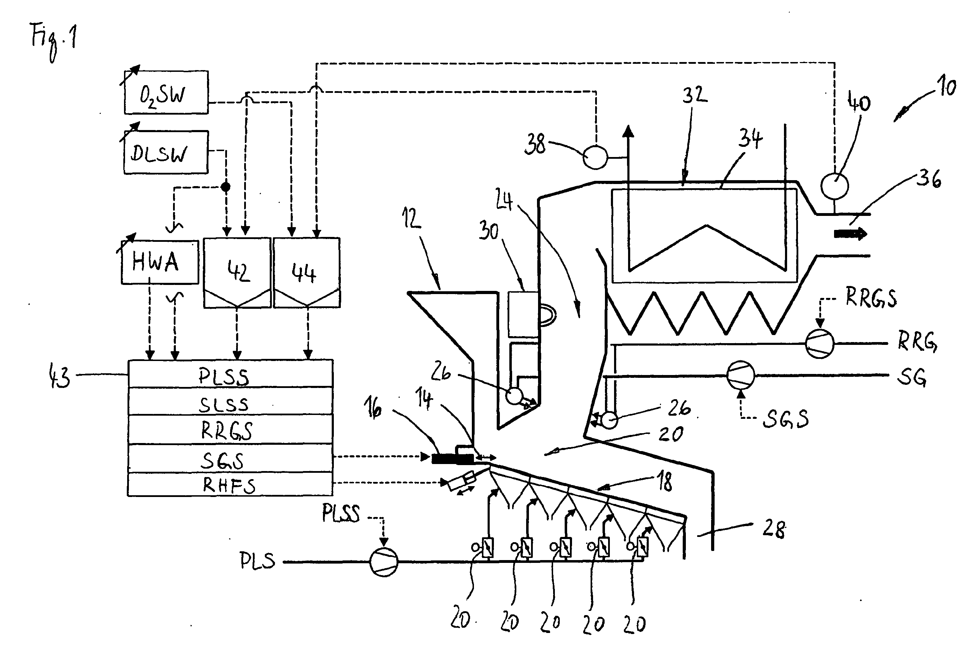

In Fig. 1 ist eine Müllverbrennungsanlage 10 gezeigt, die für eine Beschickung mit Müll einen Müllbunker 12 mit einer trichterförmigen unteren Öffnung aufweist, durch welche der Müll schwerkraftunterstützt auf einen Beschickungstisch 14 gelangt. Vom Beschickungstisch 14 wird mittels eines Aufgabestössels 16 der Müll auf den anschliessenden Verbrennungsrost 18 geschoben. Der gezeigte Verbrennungsrost 18 ist als ein beweglicher Vorschubrost ausgeführt. Unterhalb des Verbrennungsrostes 18 befinden sich mehrere Primärluftzonen, durch welche über fünf gezeigte Primärluftklappen 20 die zur Verbrennung notwendige Primärluft durch den Verbrennungsrost 18 in den oberhalb befindlichen Feuerraum 22 eingeleitet wird. Die Anzahl der Primärluftklappen 20 kann variieren und beträgt vorzugsweise 1 bis 10.

Im Feuerraum 22 findet die eigentliche Verbrennung statt. Der Feuerraum 22 öffnet sich nach oben in eine Nachbrennkammer 24, durch welche bei der Verbrennung entstehende Rauchgase entweichen können. In der Öffnung des Feuerraums 22 zur Nachbrennkammer 24 wird beidseitig zur Verwirbelung der Rauchgase der Verbrennung Sekundärluft über Sekundärluftdüsen 26 eingeblasen. Durch eine spezifische Anordnung und Ausrichtung der Sekundärluftdüsen 26 und einer Einschnürung der Wände der Nachbrennkammer 24 wird eine so genannte Mittelstromverbrennung realisiert. Bei der Mittelstromverbrennung wird einerseits der Müll und die Rauchgase in gleicher Richtung vom Beschickungstisch 14 zum Feuerraum 22 hin und andererseits Rauchgase aus einem am Ende des Verbrennungsrosts 18 angeordneten Schlackeschacht 28 zum Verbrennungsraum 22 dem Brenngut entgegen geleitet.

In der Nachbrennkammer 24 befindet sich oberhalb der Sekundärluftdüsen 26 ein Stützbrenner 30. Der Stützbrenner 30 wird, wie bereits oben erwähnt, mittels fossilen Brennstoffen betrieben und dient der Aufrechterhaltung einer Mindestfeuerungstemperatur zur vollständigen Oxidierung der Rauchgase. Die Feuerungstemperatur wird mittels eines in der Nachbrennkammer angeordneten, in Fig. 1 nicht gezeigten Temperatursensors bestimmt.

In einer an die Nachbrennkammer 24 anschliessenden Dampferzeugerkammer 32 ist ein Dampferzeuger 34 angeordnet. Der Dampferzeuger 34 ist ein Wärmetauscher zur Dampferzeugung, in welchem thermische Energie der Rauchgase zur Erzeugung von Wasserdampf genutzt wird. Der Wasserdampf kann über ein Rohrleitungssystem nicht gezeigten Turbinen zugeführt werden, in welchen die thermische Energie des Dampfes in elektrische Energie umgewandelt wird. Die in der Dampferzeuger kammer 32 abgekühlten Rauchgase werden zur weiteren Reinigung über einen Abgasschacht 36 abgeführt.

Für eine gleichmässige Bereitstellung von Elektroenergie ist eine gleichmässige Dampfproduktion im Dampferzeuger 34 von grundlegender Bedeutung. Eine gleichmässige Dampfproduktion wiederum wird erst durch eine gleichmässige Verbrennung erreicht. Eine gleichmässige Verbrennung bietet darüber hinaus ökonomische Vorteile, wie etwa eine geringere Belastung von Anlagekomponenten auf Grund eines gleichmässigeren Temperaturprofils, und oekologische Vorteile, da bei einer gleichmässigen Verbrennung geringere Mengen von Schadstoffen entstehen. Die Ursache für eine per se nicht gleichmässige Verbrennung liegt im Allgemeinen in wechselnden Müllqualitäten begründet. Bei feuchtem Müll oder Müll mit geringem Heizwert muss eine Feuerleistungsregeleinrichtung zur Steuerung der Müllverbrennung entsprechende Stellgrössen beeinflussen, um eine gleichmässige Dampfproduktion bei Einhaltung der Mindestfeuerungstemperatur zu gewährleisten.

Dazu werden, wie in Fig. 1 gezeigt, wenigstens zwei Messgrössen überwacht: zum einen mittels eines dem Dampferzeuger 34 zugeordneten Dampfsensors 38 die produzierte Dampfmenge pro Zeit oder Dampfleistung DL und zum anderen mittels eines am Abgasschacht 36 angeordneten Sauerstoffsensors 40 der Sauerstoffgehalt der Rauchgase. Die Feuerleistungsregeleinrichtung weist einen Dampfregler 42 und einen Sauerstoffregler 44 auf. Für den Operator sind Handeingriffsmöglichkeiten zur Einstellung eines Dampfleistungssollwertes DLSW, eines Sauerstoffsollwertes O₂SW und einer Heizwertanpassung HWA vorgesehen. Von einer Stellwertberechnungseinheit 43 der Feuerleistungsregeleinrichtung werden für einen Primärluftstrom PLS ein Primärluftstromstellwert PLSS, für einen Sekundärluftstrom SLS ein Sekundärluftstromstellwert SLSS, für rezirkulierende Rauchgase RRG falls vorhanden ein Rezirauchgasstromstellwert RRGS, ein Stösselgeschwindigkeitsstellwert SGS und ein Rosthubfrequenzstellwert RHFS bereitgestellt.

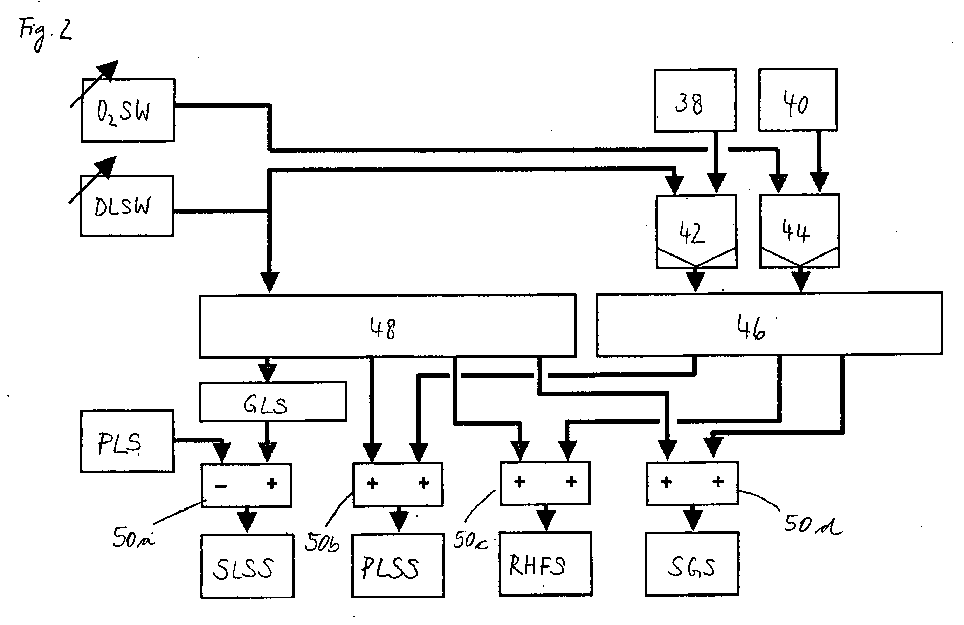

In Fig. 2 ist die aus der EP0499976 bekannte Feuerleistungsregeleinrichtung nochmals detailliert dargestellt. Wie bereits erwähnt werden in der Regelung Messwerte des Dampfsensors 38 und des Sauerstoffsensors 40 sowie des per Handeingriff eingestellten Dampfleistungssollwertes DLSW und des Sauerstoffsollwertes O₂SW an den Dampfregler 42 und den Sauerstoffregler 44 weitergeleitet. Ausgangswerte des Dampfreglers 42 und des Sauerstoffreglers 44 werden an eine Berechnungseinheit 46 für Korrekturstellwerte des Primärluftstroms PLS, der Rosthubfrequenz RHF und der Stösselgeschwindigkeit SG übermittelt. Parallel dazu werden in einer weiteren Berechnungseinheit 48 Grundstellwerte für einen Gesamtluftstrom GLS, den Primärluftstrom PLS, die Rosthubfrequenz RHF und die Stösselgeschwindigkeit SG bestimmt.

In nachgeordneten Verknüpfungseinheiten 50a, 50b, 50c, 50d werden dann die Grundstellwerte mit den Korrekturstellwerten kombiniert: in einer Verknüpfungseinheit 50a der Stellwert für den Gesamtluftstrom GLS und ein Messwert für den Primärluftstrom PLS zur Berechnung des Sekundärluftstromstellwertes SLSS, in einer Verknüpfungseinheit 50b der Grundstellwert und der Korrekturstellwert für den Primärluftstrom PLS zum Primärluftstromstellwert PLSS, in einer Verknüpfungseinheit 50c der Grundstellwert und der Korrekturstellwert für die Rosthubfrequenz RHF zum Rosthubfrequenzstellwert RHFS und in einer Verknüpfungseinheit 50d der Grundstellwert und der Korrekturstellwert für die Stösselgeschwindigkeit SG zum Stösselgeschwindigkeitsstellwert SGS.

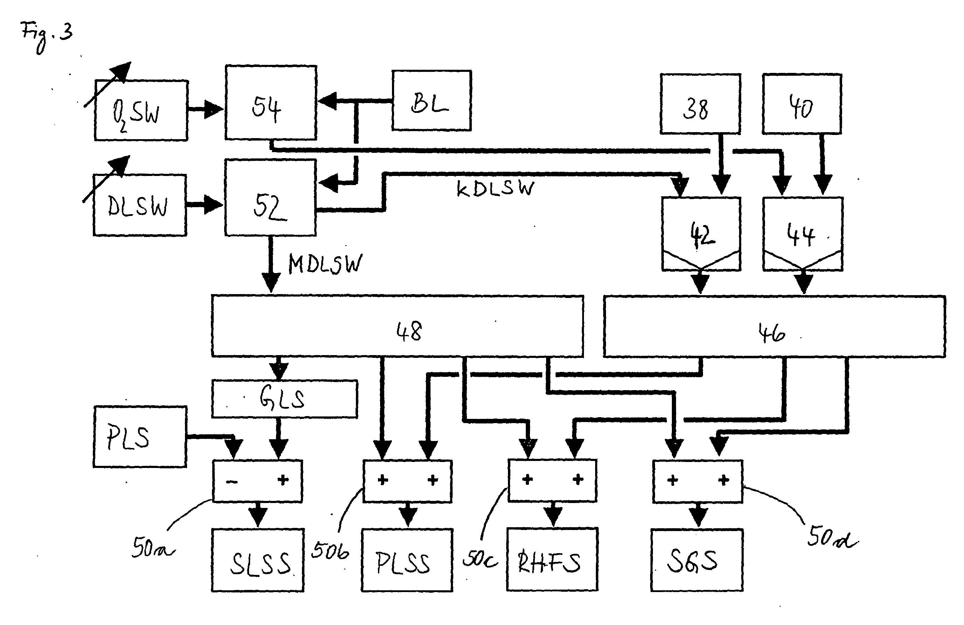

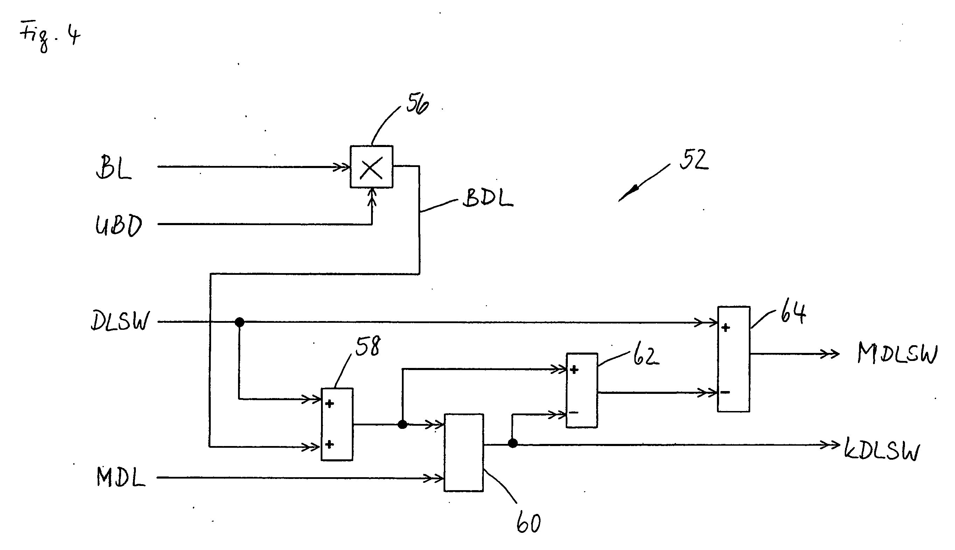

In Fig. 3 ist eine zur Ausführung des erfindungsgemässen Regelungsverfahrens befähigte Feuerleistungsregeleinrichtung gezeigt. Dabei ist zum einen zwischen dem Handeingriff für den Dampfleistungssollwert DLSW und der Berechnungseinheit für die Grundstellwerte 48 bzw. dem Dampfregler 42 eine Brennerdampfleistungsausgleichseinheit 52 eingefügt. Diese Brennerdampfleistungsausgleichseinheit 52 wird detailliert im Zusammenhang mit Fig. 4 beschrieben. Zum anderen ist zwischen dem Handeingriff für den Sauerstoffsollwert O₂SW und den Sauerstoffregler 44 eine Sauerstoffsollwertkorrektureinheit 54 angeordnet. Sowohl die Brennerdampfleistungsausgleichseinheit 52 als auch die Sauerstoffsollwertkorrektureinheit 54 erhalten als Eingangsgrösse die Brennerleistung BL des Stützbrenners 30. Die Brennerleistung BL wird dabei anhand des effektiven Gas- oder Ölverbrauchs des Stützbrenners 30 ermittelt. Als geeignete Messgrössen für die Brennerleistung BL dienen dabei beispielsweise ein Brennstoffdurchfluss, ein Brennstoffvolumenstrom oder ein Brennstofffüllstand.

Die Sauerstoffsollwertkorrektureinheit 54 trägt dem Fakt Rechnung, dass bei Zündung des Stützbrenners 30 der Sauerstoffgehalt im nun gemischten Müll-Stützbrenner-Feuer niedriger ist als in einem Müllfeuer ohne Stützbrenneranteil. Eine konventionelle Feuerleistungsregeleinrichtung wird bei abnehmendem Sauerstoffgehalt versuchen, die Verbrennung zu bremsen und dadurch tendenziell mehr Dampfleistung aus der Müllverbrennung durch eine vom Stützbrenners 30 erzeugte Brennerdampfleistung BDL zu ersetzen. Ausgehend vom Messwert für die Brennerleistung BL kompensiert die Sauerstoffsollwertkorrektureinheit 54 diesen Effekt und verhindert dadurch einen tendenziell grösseren Verbrauch fossiler Brennstoffe für den Stützbrenner 30.

Der Aufbau der Brennerdampfleistungsausgleichseinheit 52 ist detailliert in Fig. 4 dargestellt. Neben den in Fig. 3 gezeigten Eingangsgrössen für den Messwert der Brennerleistung BL und den per Handeingriff eingestellten Dampfleistungssollwert DLSW, verarbeitet die Brennerdampfleistungsausgleichseinheit 52 als Eingangsparameter einen Umrechnungsfaktor "Brennerleistung-in-Brennerdampfleistung" UBD und einen Eingangsparameter "maximale Dampfleistung" MDL. Die maximale Dampfleistung MDL ist beispielsweise durch die Anlagenspezifikation vorgegeben. Ausgangswerte der Brennerdampfleistungsausgleichseinheit 52 sind zwei Dampfleistungssollwerte, namentlich ein korrigierter Dampfleistungssollwert kDLSW, der zum Dampfregler 42 übermittelt wird, und ein Mülldampfleistungssollwert. MDLSW, welcher an die Berechnungseinheit für Grundstellwerte 48 weitergeleitet wird. Der korrigierte Dampfleistungssollwert kDLSW berücksichtigt dabei die Brennerdampfleistung BDL, also den durch den Stützbrenner 30 an der Dampfleistung erzeugten Beitrag. Der Mülldampfleistungssollwert MDLSW bezieht sich allein auf die durch die Müllverbrennung erzeugte Dampfleistung.

In einer Multipliziereinheit 56 der Brennerdampfleistungsausgleichseinheit 52 wird zunächst die Brennerleistung BL mit dem Umrechnungsfaktor Brennerleistung-in-Brennerdampfleistung UBD multipliziert, um die Brennerdampfleistung BDL zu ermitteln. Die Brennerdampfleistung BDL wird dann in einer Addiereinheit 58 zum per Handeingriff vom Operator eingestellten Dampfleistungssollwert DLSW addiert. Das Ergebnis der Addition wird anschliessend in einer Minimalwertauswahleinheit 60 mit der maximalen Dampfleistung MDL verglichen und als korrigierter Dampfleistungssollwert kDLSW an den Dampfregler 42 weitergegeben.

Zur Berechnung des Mülldampfleistungssollwerts MDLSW wird vom Ergebnis der Addiereinheit 58 zunächst der korrigierte Dampfleistungssollwert kDLSW in einer ersten Subtraktionseinheit 62 abgezogen. Das Ergebnis nach der ersten Subtraktionseinheit 62 wird an eine zweite Subtraktionseinheit 64 weitergeleitet und von dem per Handeingriff eingestellten Dampfleistungssollwert DLSW subtrahiert. Dabei wird der Dampfleistungssollwert DLSW immer dann vermindert, wenn die Summe aus dem vorgegebenen Dampfleistungssollwert DLSW und der Brennerdampfleistung BDL grösser ist als die maximale Dampfleistung MDL. Das Ergebnis aus dieser zweiten Subtraktion wird dann als Mülldampfleistungssollwert MDLSW an die Berechnungseinheit für Grundstellwerte 48 übergeben.

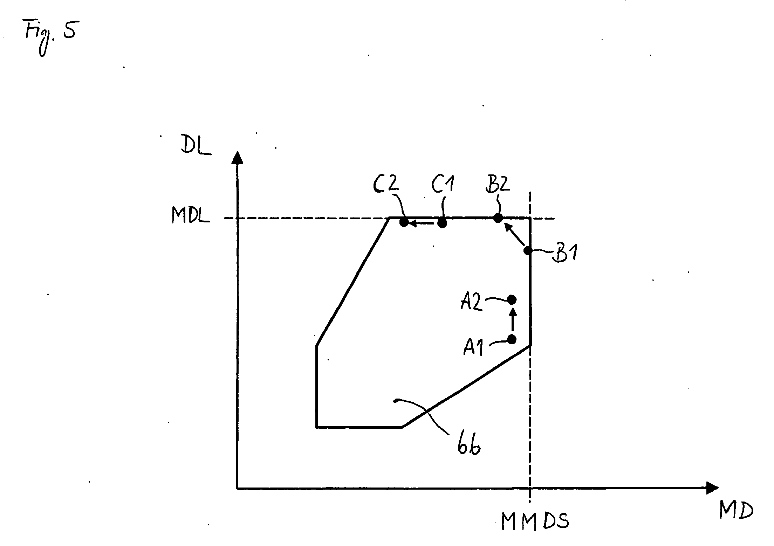

Anhand eines in Fig. 5 gezeigten Feuerungsdiagramms folgt nun eine Erläuterung der Funktion der Brennerdampfleistungsausgleichseinheit 52. Im Feuerungsdiagramm ist die Dampfleistung DL gegenüber dem Mülldurchsatz aufgetragen. Der mit einer durchgezogenen Linie umrandete hexagonale Bereich ist der Arbeitsbereich 66 der Müllverbrennungsanlage. Die Funktion des erfindungsgemässen Regelungsverfahrens wird nachfolgend anhand von drei Szenarien mit Ausgangspositionen A1, B1, C1 im Feuerungsdiagramm beschrieben.

Das erste Szenario startet bei der Ausgangsposition A1 nahe einem maximalen Mülldurchsatz MMDS und deutlich unterhalb einer maximalen Dampfleistung MDL im Feuerungsdiagramm. Bei einer notwendigen Zündung des Stützbrenners 30 aufgrund des Unterschreitens der Mindestfeuerungstemperatur wird die Stösselgeschwindigkeit SG sowie die Rosthubfrequenz RHF und somit der Mülldurchsatz MD nahezu unverändert belassen. Allerdings erhöht sich die Dampfleistung DL, da der korrigierte Dampfleistungssollwert kDLSW nun auf die Summe aus dem per Handeingriff eingestellten Dampfleistungssollwert DLSW und der Brennerdampfleistung BDL eingestellt wird. Der Mülldampfleistungssollwert MDLSW bleibt hingegen unverändert und gleich dem per Handeingriff eingestellten Dampfleistungssollwert DLSW. Aufgrund des Regelungseingriffs verschiebt sich der Arbeitspunkt von der Ausgangsposition A1 zur Endposition A2, wobei die Menge des zugeführten Mülls, dessen Verweilzeit auf dem Rost sowie die Luftzufuhr unverändert bleibt.

Ein zweites Szenario beginnt bei der Ausgangsposition B1 des Arbeitspunktes. Die Ausgangsposition B1 befindet sich auf der Linie des maximalen Mülldurchsatzes MMDF und nahe der Linie der maximalen Dampfleistung MDL innerhalb des Arbeitsbereichs 66. Wiederum unterschreitet die Feuerungstemperatur die Mindestfeuerungstemperatur, so dass der Stützbrenner 30 gezündet werden muss. In Folge dessen überschreitet die Summe aus berechneter Brennerdampfleistung BDL und dem per Handeingriff vom Operator eingestellten Dampfleistungssollwert DLSW die maximale Dampfleistung MDL. Die Minimalwertauswahlseinheit 60 der Brennerleistungsausgleichseinheit 52 legt nun den Wert der maximalen Dampfleistung MDL als korrigierten Dampfleistungssollwert kDLSW fest. Folglich erhöht sich die Dampfleistung DL höchstens bis auf den Wert der maximalen Dampfleistung MDL. Dem Mülldampfleistungssollwert MDLSW wird der per Handeingriff vom Operator eingestellte Dampfleistungssollwert DLSW, abzüglich des Differenzwertes zwischen der Summe aus dem Dampfleistungssollwert DLSW und der berechneten Brennerdampfleistung BDL sowie der maximalen Dampfleistung MDL zugewiesen. Ein derartig verringerter Mülldampfleistungssollwert MDLSW bewirkt eine Reduktion der Stösselgeschwindigkeit SG und der Rosthubfrequenz RHF und dadurch ein Zurückfahren des Mülldurchsatzes MD. Auf Grund des reduzierten Mülldampfleistungssollwertes MDLSW werden ausserdem die Grundstellwerte für den Gesamtluftstrom GLS und den Primärluftstrom PLS abgesenkt und somit eine Überlastung des Saugzuges durch zu grosse Mengen Rauchgas vermieden. Die Position des Arbeitspunktes verschiebt sich von B1 nach B2.

Ausgehend von der Position C1, die sich an der Grenze des Arbeitsbereichs 66 auf der Geraden der maximalen Dampfleistung MDL und bei einem mittleren Mülldurchsatz befindet, ergibt sich beim Zünden des Stützbrenners 30 ein drittes Szenario. Dabei wird die Position des Arbeitspunktes C1 zur Position C2 überführt. Ähnlich dem zweiten Szenario, legt hier die Brennerleistungsausgleichseinheit 52 die maximale Dampfleistung MDL, die bereits nahezu erreicht ist, als korrigierten Dampfleistungssollwert kDLSW fest. Der Mülldampfleistungssollwert MDLSW erhält den per Handeingriff eingestellten Dampfleistungssollwert DLSW abzüglich der Differenz, die sich einerseits aus der Summe des per Handeingriff eingestellten Dampfleistungssollwertes DLSW und der berechneten Brennerdampfleistung BDL und andererseits aus der maximalen Dampfleistung MDL ergibt. Folglich liegt die Endposition C2 wiederum auf der Geraden der maximalen Dampfleistung MDL, allerdings beim einem stärker verringerten Mülldurchsatz MD. Dies rührt vom stärker verringerten Mülldampfleistungssollwert MDLSW her, was wiederum zu reduzierten Aktivitäten von Roststössel und Luft führt. Eine derartige Reaktion ist insbesondere deshalb angebracht, da ein Stützbrennereinsatz bei einer hohen Dampfleistung DL auf einen unzureichenden Heizwert des Mülls oder sonstige Störungen im Verbrennungsablauf hindeuten.

Drei weitere Szenarien ergeben sich bei einem Erreichen bzw. Überschreiten der Mindestfeuerungstemperatur durch den Stützbrennereinsatz. Dabei werden zunächst die Stützbrenner 30 abgeschaltet, woraufhin das erfindungsgemässe Regelungsverfahren den Arbeitspunkt von einer der Positionen A2, B2 und C2 auf analoge Weise, wie in den ersten drei Szenarien beschreiben, zu den Positionen A1, B1 bzw. C1 zurück überführt.

Alle diskutierten Szenarien zeigen, dass das erfindungsgemässe Regelungsverfahren dazu geeignet ist, automatisch auf eine Zündung bzw. Abschaltung von Stützbrennern 30 zu reagieren und dabei unter Berücksichtigung der durch den Stützbrenner 30 erzeugten Brennerdampfleistung BDL den Arbeitspunkt der Müllverbrennung jeweils innerhalb des Arbeitsbereichs 66 an eine optimierte Position zu überführen. Dabei wird verhindert, dass die Brennerdampfleistung BDL dauerhaft Dampfleistung DL, welche durch die Müllverbrennung erzeugt wird, ersetzt. Auf diese Weise ist ein automatisierter Müllverbrennungsbetrieb bei minimiertem Stützbrennereinsatz gewährleistet, wobei unter Einhaltung einer Mindestfeuerungstemperatur Brennstoffkosten für die Stützbrennerfeuerung minimiert und Mülldurchsätze MD maximiert werden.

## Patentansprüche

1. Regelungsverfahren zum Betrieb einer Müllverbrennungsanlage (10) mit einem steuerbaren Mülldurchsatz (MD), mit einem Dampferzeuger (34), dessen Dampfleistung (DL) gemessen wird, und mit einem Stützbrenner (30), dessen Brennerleistung (BL) gemessen und gesteuert wird, **dadurch gekennzeichnet, dass** die Dampfleistung (DL) in Abhängigkeit von der Brennerleistung (BL) des Stützbrenners (30) geregelt wird.

2. Regelungsverfahren nach Anspruch 1, **gekennzeichnet durch** eine Berechnung einer vom Stützbrenner (30) erzeugten Brennerdampfleistung (BDL) in Abhängigkeit von der Brennerleistung (BL).

3. Regelungsverfahren nach Anspruch 2, **dadurch gekennzeichnet, dass** die Brennerdampfleistung (BDL) zur Berechnung eines korrigierten Dampfleistungssollwertes (kDLSW) und eines Mülldampfleistungssollwertes (MDLSW) genutzt wird.

4. Regelungsverfahren nach Anspruch 3, **dadurch gekennzeichnet, dass** der korrigierte Dampfleistungssollwert (kDLSW) gleich dem Minimum von einerseits einer vorgegebenen maximalen Dampfleistung (MDL) und andererseits der Summe aus der Brennerdampfleistung (BDL) und einem vorgegebenen Dampfleistungssollwert (DLSW) gesetzt wird.

5. Regelungsverfahren nach Anspruch 4, **dadurch gekennzeichnet, dass** der Mülldampfleistungssollwert (MDLSW) gleich dem vorgegebenen Dampfleistungssollwert (DLSW) abzüglich einer um den korrigierten Dampfleistungssollwert (kDLSW) verminderten Summe, die sich aus dem vorgegeben Dampfleistungssollwert (DLSW) und der Brennerdampfleistung (BDL) ergibt, gesetzt wird.

6. Regelungsverfahren nach Anspruch 5, **dadurch gekennzeichnet, dass** der korrigierte Dampfleistungssollwert (kDLSW) und eine mittels eines Dampfsensors (38) gemessene Dampfleistung (DL) an einen Dampfregler (42) und der Mülldampfleistungssollwert (MDLSW) an eine Berechnungseinheit für Grundstellwerte (48) übermittelt werden, wobei Verknüpfungseinheiten (50a, 50b, 50c, 50d) durch Verknüpfung von Ausgangsgrössen aus der Berechnungseinheit für Grundstellwerte (48) und einer Berechnungseinheit für Korrekturstellwerte (46), die als Eingangsgrösse die Ausgangsgrösse des Dampfreglers (42) erhält, einen Sekundärluftstromstellwert (SLSS), einen Primärluftstromstellwert (PLSS), einen Rosthubfrequenzstellwert (RHFS) und/oder einen Stösselgeschwindigkeitsstellwert (SGS) bestimmen.

7. Feuerleistungsregeleinrichtung für eine Müllverbrennungsanlage (10) mit einem Stützbrenner (30) zur Ausführung eines Regelungsverfahrens nach einem der Ansprüche 1 bis 6 mit einem Dampfregler (42), der als Eingangsgrösse eine Dampfleistung (DL) von einem Dampfsensor (38) und einen Dampfleistungssollwert (DLS) erhält und Stellwerte für wenigstens eines der Stellglieder Primärluftstrom (PLS), Sekundärluftstrom (SLS), Rosthubfrequenz (RHF) und Stösselgeschwindigkeit (SG) erzeugt, **gekennzeichnet durch** eine Brennerleistungsausgleicheinheit (52), die eine Brennerleistung (BL) des Stützbrenners (30) als Eingangsgrösse erhält und deren Ausgangsgrösse dem Dampfregler (42) zugeführt wird.

8. Feuerleistungsregeleinrichtung nach Anspruch 7, **gekennzeichnet durch** eine Berechnungseinheit für Grundstellwerte (48) und eine Berechnungseinheit für Korrekturstellwerte (46) sowie mit Verknüpfungseinheiten (50a, 50b, 50c, 50d) zur Bestimmung eines Sekundärluftstromstellwertes (SLSS), eines Primärluftstromstellwertes (PLSS), eines Rosthubfrequenzstellwertes (RHFS) und/oder eines Stösselgeschwindigkeitsstellwertes (SGS), wobei die Berennerleistungsausgleicheinheit (52) dazu befähigt ist, aus Eingangsgrössen für eine Brennerleistung (BL) des Stützbrenners (30) und einem vorgegebenen Dampfleistungssollwert (DLSW) einen Mülldampfleistungssollwert (MDLSW) und einen korrigierten Dampfleistungssollwert (kDLSW) zu berechnen.

9. Feuerleistungsregeleinrichtung nach Anspruch 8, **dadurch gekennzeichnet, dass** die Brennerleistungsausgleicheinheit (52) mit mindestens einer Multipliziereinheit (56) zur Berechnung einer Brennerdampfleistung (BDL) aus der Brennerleistung (BL), einer Addiereinheit (58), einer Subtraktionseinheit (62, 64) und einer Minimalwertauswahleinheit (60) ausgestattet ist.

10. Müllverbrennungsanlage mit einem steuerbaren Mülldurchsatz (MD), einem Dampferzeuger (34), dessen Dampfleistung (DL) messbar ist, einem Stützbrenner (30), dessen Brennerleistung (BL) gesteuert werden kann, und mit einer Feuerleistungsregeleinrichtung nach einem der Ansprüche 7 bis 9.

11. Müllverbrennungsanlage nach Anspruch 10, **dadurch gekennzeichnet, dass** sie zur Bestimmung der Brennerleistung (BL) mit einer Messeinrichtung zur Ermittlung eines Brennstoffverbrauchs des Stützbrenners (30) ausgestattet ist.

## Claims

1. A regulation method for operating a waste incineration plant (10) with a controllable waste throughput (MD), with a steam generator (34), the steam power (DL) of which is measured, and with an auxiliary burner (30), the burner power (BL) of which is measured and controlled, wherein the steam power (DL) is regulated as a function of the burner power (BL) of the auxiliary burner (30).

2. The regulation method as claimed in claim 1, wherein a calculation of a burner steam power (BDL) generated by the auxiliary burner (30) takes place as a function of the burner power (BL).

3. The regulation method as claimed in claim 2, wherein the burner steam power (BDL) is utilized for calculating a corrected steam power desired value (kDLSW) and a waste steam power desired value (MDLSW).

4. The regulation method as claimed in claim 3, wherein the corrected steam power desired value (kDLSW) is set equal to the minimum of, on the one hand, a predetermined maximum steam power (MDL), and, on the other hand, the sum of the burner steam power (BDL) and a predetermined steam power desired value (DLSW).

5. The regulation method as claimed in claim 4, wherein the waste steam power desired value (MDLSW) is set equal to the predetermined steam power desired value (DLSW), minus a sum which is reduced by the amount of the corrected steam power desired value (kDLSW) and which is obtained from the predetermined steam power desired value (DLSW) and the burner steam power (BDL).

6. The regulation method as claimed in claim 5, wherein the corrected steam power desired value (kDLSW) and a steam power (DL) measured by means of a steam sensor (38) are transmitted to a steam controller (42) and the waste steam power desired value (MDLSW) is transmitted to a calculation unit for basic set values (48), linkage units (50a, 50b, 50c, 50d) determining a secondary-air stream set value (SLSS), a primary-air stream set value (PLSS), a grate stroke frequency set value (RHFS) and/or a ram speed set value (SGS) by the linkage of output variables from the calculation unit for basic set values (48) and a calculation unit for correction set values (46) which receives as an input variable the output variable of the steam controller (42).

7. A fire power regulation device for a waste incineration plant (10) with an auxiliary burner (30) for carrying out a regulation method as claimed in one of claims 1 to 6, with a steam controller (42) which receives as input variables a steam power (DL) from a steam sensor (38) and a steam power desired value (DLS) and generates set values for at least one of the primary-air stream (PLS), secondary-air stream (SLS), grate stroke frequency (RHF) and ram speed (SG) as actuators, wherein there is a burner power compensation unit (52) which receives a burner power (BL) of the auxiliary burner (30) as an input variable and the output variable of which is supplied to the steam controller (42).

8. The fire power regulation device as claimed in claim 7, wherein there is a calculation unit for basic set values (48) and there is a calculation unit for correction set values (46), and also with linkage units (50a, 50b, 50c, 50d) for determining a secondary-air stream set value (SLSS), a primary-air stream set value (PLSS), a grate stroke frequency set value (RHFS) and/or a ram speed set value (SGS), the burner power compensation unit (52) being capable of calculating a waste steam power desired value (MDLSW) and a corrected steam power desired value (kDLSW) from input variables for a burner power (BL) of the auxiliary burner (30) and from a predetermined steam power desired value (DLSW).

9. The fire power regulation device as claimed in claim 8, wherein the burner power compensation unit (52) is equipped with at least one multiplication unit (56) for calculating a burner steam power (BDL) from the burner power (BL), with an addition unit (58), with a subtraction unit (62, 64) and with a minimum value selection unit (60).

10. A waste incineration plant with a controllable waste throughput (MD), with a steam generator (34), the steam power (DL) of which can be measured, with an auxiliary burner (30), the burner power (BL) of which can be controlled, and a fire power regulation device as claimed in one of claims 7 to 9.

11. The waste incineration plant as claimed in claim 10, wherein, to determine the burner power (BL), it is equipped with a measurement device for determining a fuel consumption of the auxiliary burner (30).

## Revendications

1. Procédé de régulation pour la conduite d'une installation d'incinération d'ordures (10) avec un débit d'ordures réglable (MD), avec un générateur de vapeur (34), dont on mesure la production de vapeur (DL), et avec un brûleur d'appoint (30), dont on mesure et on règle la puissance de brûleur (BL), **caractérisé en ce que** l'on régule la production de vapeur (DL) en fonction de la puissance de brûleur (BL) du brûleur d'appoint (30).

2. Procédé de régulation selon la revendication 1, **caractérisé par** un calcul d'une production de vapeur du brûleur (BDL) produite par le brûleur d'appoint (30) en fonction de la puissance de brûleur (BL).

3. Procédé de régulation selon la revendication 2, **caractérisé en ce que** l'on utilise la production de vapeur du brûleur (BDL) pour le calcul d'une valeur de consigne corrigée de la production de vapeur (kDLSW) et d'une valeur de consigne de la production de vapeur des ordures (MDLSW).

4. Procédé de régulation selon la revendication 3, **caractérisé en ce que** la valeur de consigne corrigée de la production de vapeur (kDLSW) est choisie égale au minimum entre d'une part une production de vapeur maximale prédéterminée (MDL) et d'autre part la somme de la production de vapeur du brûleur (BDL) et une valeur de consigne prédéterminée de la production de vapeur (DLSW).

5. Procédé de régulation selon la revendication 4, **caractérisé en ce que** la valeur de consigne de la production de vapeur des ordures (MDLSW) est choisie égale à la valeur de consigne prédéterminée de la production de vapeur (DLSW) sous déduction d'une somme, diminuée de la valeur de consigne corrigée de la production de vapeur (kDLSW), qui se compose de la valeur de consigne prédéterminée de la production de vapeur (DLSW) et de la production de vapeur du brûleur (BDL).

6. Procédé de régulation selon la revendication 5, **caractérisé en ce que** l'on communique la valeur de consigne corrigée de la production de vapeur (kDLSW) et une production de vapeur (DL) mesurée au moyen d'un détecteur de vapeur (38) à un régulateur de vapeur (42) et la valeur de consigne de la production de vapeur des ordures (MDLSW) à une unité de calcul pour des valeurs de réglage de base (48), dans lequel des unités de liaison (50a, 50b, 50c, 50d) déterminent, par liaison de grandeurs de sortie de l'unité de calcul pour des valeurs de réglage de base (48) et d'une unité de calcul pour des valeurs de réglage de correction (46), qui reçoit comme grandeur d'entrée la grandeur de sortie du régulateur de vapeur (42), une valeur de réglage du flux d'air secondaire (SLSS), une valeur de réglage du flux d'air primaire (PLSS), une valeur de réglage de la fréquence de levée de la grille (RHFS) et/ou une valeur de réglage de la vitesse du poussoir (SGS).

7. Dispositif de régulation de la puissance de combustion pour une installation d'incinération d'ordures (10) disposant d'un brûleur d'appoint (30) pour la mise en oeuvre d'un procédé de régulation selon l'une quelconque des revendications 1 à 6, avec un régulateur de vapeur (42), qui reçoit comme grandeur d'entrée une production de vapeur (DL) en provenance d'un détecteur de vapeur (38) et une valeur de consigne de la production de vapeur (DLS) et qui produit des valeurs de réglage pour au moins un des organes de réglage du flux d'air primaire (PLS), du flux d'air secondaire (SLS), de la fréquence de levée de la grille (RHF) et de la vitesse du poussoir (SG), **caractérisé par** une unité de compensation de la puissance du brûleur (52), qui reçoit une puissance de brûleur (BL) du brûleur d'appoint (30) comme grandeur d'entrée et dont la grandeur de sortie est envoyée au régulateur de vapeur (42).

8. Dispositif de régulation de la puissance de combustion selon la revendication 7, **caractérisé par** une unité de calcul pour des valeurs de réglage de base (48) et une unité de calcul pour des valeurs de réglage de correction (46), ainsi qu'avec des unités de liaison (50a, 50b, 50c, 50d) pour la détermination d'une valeur de réglage du flux d'air secondaire (SLSS), d'une valeur de réglage du flux d'air primaire (PLSS), d'une valeur de réglage de la fréquence de levée de la grille (RHFS) et/ou d'une valeur de réglage de la vitesse du poussoir (SGS), dans lequel l'unité de compensation de la puissance du brûleur (52) est capable de calculer, à partir de grandeurs d'entrée pour une puissance de brûleur (BL) du brûleur d'appoint (30) et d'une valeur de consigne prédéterminée de la production de vapeur (DLSW), une valeur de consigne de la production de vapeur des ordures (MDLSW) et une valeur de consigne corrigée de la production de vapeur (kDLSW).

9. Dispositif de régulation de la puissance de combustion selon la revendication 8, **caractérisé en ce que** l'unité de compensation de la puissance du brûleur (52) est équipée d'au moins une unité de multiplication (56) pour le calcul d'une production de vapeur du brûleur (BDL) à partir de la puissance de brûleur (BL), d'une unité d'addition (58), d'une unité de soustraction (62, 64) et d'une unité de sélection de valeur minimale (60).

10. Installation d'incinération d'ordures avec un débit d'ordures réglable (MD), avec un générateur de vapeur (34), dont la production de vapeur (DL) peut être mesurée, avec un brûleur d'appoint (30), dont la puissance de brûleur (BL) peut être réglée, et avec un dispositif de régulation de la puissance de combustion selon l'une quelconque des revendications 7 à 9.

11. Installation d'incinération d'ordures selon la revendication 10, **caractérisée en ce qu'**elle est équipée, pour la détermination de la puissance de brûleur (BL), d'un dispositif de mesure pour la détermination d'une consommation de combustible du brûleur d'appoint (30).
